# FASCICULE DE BREVET EUROPEEN

(11) **EP 3 959 427 B1**
(45) Date de publication et mention de la délivrance du brevet: **21.08.2024**
(21) Numéro de dépôt: 20716831.1
(22) Date de dépôt: 10.04.2020
(51) Int. Cl.: F02C 3/30, F02C 9/00

(54) **PROCÉDÉ DE RÉGULATION DE TURBOMACHINE COMPRENANT UN DISPOSITIF D'AUGMENTATION TEMPORAIRE DE PUISSANCE**
VERFAHREN ZUR REGELUNG EINER TURBOMASCHINE MIT EINER TEMPORÄREN LEISTUNGSERHÖHUNGSVORRICHTUNG
METHOD FOR REGULATING A TURBOMACHINE COMPRISING A TEMPORARY POWER-INCREASING DEVICE

(30) Priorité: 24.04.2019 FR 1904310
(43) Date de publication de la demande: 02.03.2022
(73) Titulaire: Safran Helicopter Engines, 64510 Bordes (FR)
(72) Inventeur: POUSSE, Frédéric, Gaétan, 77550 MOISSY-CRAMAYEL (FR); MOINE, Bertrand, Yves, Georges, 77550 MOISSY-CRAMAYEL (FR)
(74) Mandataire: Cabinet Beau de Loménie
(86) Numéro de dépôt international: PCT/EP2020/060332
(87) Numéro de publication internationale: WO 2020/216639

(56) Documents cités:
- EP-A1- 2 896 806
- DE-A1- 102012 224 009
- FR-A1- 3 000 137
- US-A- 2 795 107
- US-A- 2 974 482
- US-A1- 2018 238 235

## Description

### Domaine Technique

Le présent exposé concerne un procédé de régulation de turbomachine comprenant un dispositif d'augmentation temporaire de puissance.

Le terme « turbomachine » désigne l'ensemble des appareils à turbine à gaz produisant une énergie motrice, parmi lesquels on distingue notamment les turboréacteurs fournissant une poussée nécessaire à la propulsion par réaction à l'éjection à grande vitesse de gaz chauds, et les turbomoteurs dans lesquels l'énergie motrice est fournie par la rotation d'un arbre moteur. Par exemple, des turbomoteurs sont utilisés comme moteur pour des hélicoptères, des navires, des trains, ou encore comme moteur industriel. Les turbopropulseurs (turbomoteur entrainant une hélice) sont également des turbomoteurs utilisés comme moteur d'avion.

### Technique antérieure

On connaît différents dispositifs d'augmentation temporaire de puissance de turbomachine, par exemple par FR 3 000 137 ou FR 3 057 614. De tels dispositifs permettent d'injecter un fluide réfrigérant en amont du compresseur de la turbomachine, ce qui a pour effet d'augmenter temporairement sa puissance. Le document US 2 795 107 A décrit un autre procédé de régulation d'une turbomachine selon l'état de la technique.

Toutefois, ces dispositifs connus sont très consommateur de fluide réfrigérant, ce qui pose un problème étant donné que ce fluide réfrigérant est embarqué, ce qui limite sa disponibilité. Par ailleurs l'injection n'est pas optimisée dans tout le domaine. Il existe donc un besoin en ce sens.

### Exposé de l'invention

Un mode de réalisation concerne un procédé de régulation de turbomachine comprenant un dispositif d'augmentation temporaire de puissance, ledit dispositif comprenant un réservoir configuré pour contenir un fluide réfrigérant et un circuit d'injection configuré pour injecter du fluide réfrigérant via une rampe d'injection en amont d'au moins un étage de compresseur de la turbomachine, le débit d'injection du fluide réfrigérant étant variable, ledit procédé de régulation comprenant une étape d'activation du dispositif d'augmentation temporaire de puissance dans laquelle on injecte du fluide réfrigérant en amont d'au moins un étage de compresseur de la turbomachine et une étape de régulation du débit de fluide réfrigérant dans laquelle on ajuste le débit de fluide réfrigérant injecté en fonction de la pression atmosphérique et de la température ambiante et d'au moins un paramètre de la turbomachine tel que la vitesse de rotation d'un générateur de gaz, la vitesse de rotation d'une turbine basse pression ou d'une turbine libre, la pression des gaz en sortie d'un étage de compresseur, la température en entrée de la turbine basse pression ou de la turbine libre, le couple moteur ; et d'au moins un paramètre de l'aéronef sur lequel la turbomachine est configurée pour être montée tel que le pas collectif d'un rotor d'hélicoptère ou le pas d'une hélice d'un ou plusieurs turbopropulseur.

Dans le présent exposé, les termes « aval » et « amont » sont considérés suivant le sens d'écoulement normal des gaz au sein de la turbomachine.

Par exemple, le fluide réfrigérant peut être de l'eau ou un mélange d'eau et d'un additif, par exemple un antigel, comme par exemple du méthanol, de l'éthanol ou du glycol. Par la suite, et sauf indication contraire par « réfrigérant » on entend « fluide réfrigérant ».

Par exemple, le débit d'injection peut être variable grâce à une pompe à débit variable, par exemple une pompe à cylindrée fixe mais à vitesse de rotation du rotor variable ou bien à vitesse de rotation du rotor fixe mais à cylindrée variable. Dans un tel exemple la pompe peut permettre de pomper le réfrigérant depuis le réservoir, et de l'injecter à une pression prédéterminée via la rampe, auquel cas le réservoir de réfrigérant n'est pas nécessairement sous pression. Selon un autre exemple, le débit d'injection peut être variable grâce à un clapet à ouverture variable. Dans un tel exemple, le réservoir peut être pressurisé. Selon encore un autre exemple, le circuit d'injection comprend un pompe et un clapet, le débit de la pompe et/ou l'ouverture du clapet étant variable(s).

Un tel procédé de régulation est applicable quel que soit le type d'aéronef sur lequel la turbomachine est configurée pour être montée (par ex. voilure fixe ou tournante, présence d'une seule ou de plusieurs turbomachines, etc.).

Les inventeurs ont constaté que le débit de réfrigérant injecté peut être au plus proche de besoin réel de la turbomachine pour une augmentation de puissance donnée, lorsqu'il est ajusté en fonction de la pression atmosphérique ou de la température ambiante, ou des deux. Par exemple, le besoin d'une telle injection de fluide peut se restreindre à un domaine de basse altitude et de températures élevées. Par exemple de ISA à ISA+30 et de 0m à 3000m.

En effet, l'injection de fluide réfrigérant permet de refroidir l'air en amont de l'étage de compression, augmentant ainsi sa densité et donc le débit massique d'oxygène admis dans la chambre de combustion de la turbomachine. Par ailleurs, la vaporisation du fluide réfrigérant dans la chambre de combustion permet d'augmenter très sensiblement la pression et/ou le débit volumique en aval de la chambre de combustion, et donc le travail mécanique récupéré dans la turbine. Aussi, la densité et la viscosité du réfrigérant variant en fonction de la pression et de la température, la pression atmosphérique et la température ambiante sont des paramètres pertinents à prendre en considération pour ajuster le débit.

Par exemple, la régulation est réalisée à l'aide d'une cartographie (ou table) avec en entrée la pression atmosphérique et/ou la température ambiante, et en sortie le débit à injecter. Selon un autre exemple, la régulation peut être réalisée à l'aide d'une cartographie avec en entrée un paramètre parmi la pression atmosphérique et la température ambiante et en sortie un débit à injecter, suivi d'une correction éventuelle via une autre cartographie ou un calcul analytique (ou fonction analytique) avec en entrée l'autre paramètre parmi la pression atmosphérique et la température ambiante et en sortie une correction du débit (à ajouter ou à retrancher). Selon encore un autre exemple, la régulation peut être réalisée à l'aide d'un calcul analytique du type débit à injecter en fonction de la pression atmosphérique et/ou de la température ambiante. Selon un autre exemple, la régulation peut être réalisée à l'aide d'un calcul analytique du type débit à injecter en fonction d'un seul des deux paramètres parmi la pression atmosphérique et de la température ambiante, suivi d'une correction éventuelle en fonction de l'autre paramètre parmi la pression atmosphérique et de la température ambiante à l'aide d'une cartographie ou d'un autre calcul analytique avec en entrée l'autre paramètre et en sortie une correction du débit (à ajouter ou à retrancher). Par exemple, la régulation est réalisée à l'aide une fonction de type Débit = Fonction (pression atmosphérique, température ambiante), ou bien Débit = Fonction (pression atmosphérique) x Coefficient correctif fixe dépendant de température ambiante, ou encore Débit = [Pression atmosphérique, Température ambiante]

Dans certains modes de réalisation, on ajuste le débit de fluide réfrigérant injecté de sorte que le ratio fluide réfrigérant /air soit compris entre 0.5% et 15% en masse, par exemple entre 1% et 12% en masse. Ceci permet de s'adapter à la demande de puissance, selon le point du domaine de vol (altitude, température) ou le besoin du pilote.

Ceci permet de prendre en compte précisément le besoin de débit à injecter quel que soit le point du domaine altitude / température. Inversement, dans l'état de la technique on ne prend en compte qu'un point de débit à injecter, dimensionnant dans un point du domaine altitude/température, et le débit à injecter était non recalé et donc surdimensionné dans le reste du domaine.

Dans certains modes de réalisation, on ajuste le débit de fluide réfrigérant injecté en fonction d'au moins un autre paramètre parmi la température du fluide réfrigérant au sein du réservoir, la pression du fluide réfrigérant au niveau de la rampe d'injection.

Les caractéristiques du réfrigérant, tels que sa température et sa pression sont des paramètres représentatifs de sa viscosité et de sa densité, et sont donc des paramètres intéressants pour ajuster le débit. En d'autres termes, les paramètres physicochimiques du fluide sont utiles pour ajuster le régime de fonctionnement de l'électropompe, de façon à garantir un débit adéquat.

Dans certains modes de réalisation, on active le dispositif d'augmentation temporaire de puissance si on détecte une perte de puissance instantanée de la turbomachine et/ou si on détecte une entrée dans un régime prédéterminé de la turbomachine et/ou si on détecte un besoin de puissance additionnelle et/ou sur requête de l'utilisateur.

Ceci permet de limiter la consommation du réfrigérant au strict nécessaire en activant le dispositif d'augmentation temporaire de puissance uniquement lorsque cela est strictement nécessaire. Par exemple l'activation du dispositif d'augmentation de puissance peut être automatique ou manuelle. Par exemple, en surveillant certains paramètres comme la puissance instantanée, le régime ou le besoin de puissance, on peut activer le dispositif d'augmentation temporaire de puissance automatiquement si des valeurs seuils sont franchies. L'utilisateur peut également déterminer qu'il y a un besoin d'augmentation temporaire de puissance, et activer manuellement le dispositif d'augmentation temporaire de puissance.

Dans certains modes de réalisation, on active le dispositif d'augmentation temporaire de puissance en fonction d'au moins un paramètre de la turbomachine tel que la vitesse de rotation d'un générateur de gaz, la vitesse de rotation d'une turbine basse pression ou d'une turbine libre, la pression des gaz en sortie d'un étage de compresseur, la température en entrée de la turbine basse pression ou de la turbine libre, le couple moteur, et/ou d'au moins un paramètre de l'aéronef sur lequel la turbomachine est configuré pour être montée tel que le pas collectif d'un rotor d'hélicoptère ou le pas d'une hélice d'un ou plusieurs turbopropulseurs.

Ces paramètres, considérés seuls ou en combinaison, peuvent être représentatifs d'une perte de puissance instantanée de la turbomachine, d'une entrée dans un régime prédéterminé de la turbomachine et/ou d'un besoin de puissance additionnelle. Par ailleurs, suivant le contexte, le pilote peut autoriser ou pas le dispositif d'augmentation temporaire de puissance à déclencher automatiquement l'injection de fluide si besoin, ou rester le seul décideur de l'activation de l'injection de fluide.

Dans certains modes de réalisation, on détermine si le dispositif d'augmentation temporaire de puissance est activable avant de l'activer.

Ceci permet de vérifier que le dispositif d'augmentation temporaire de puissance est disponible avant de tenter de l'utiliser, ce qui permet d'économiser du réfrigérant dans le cas où on tenterait d'utiliser le dispositif d'augmentation temporaire de puissance sans qu'il soit disponible. Ceci permet également de garantir l'efficacité de l'injection (suffisamment de fluide) et prévenir le pilote s'il n'y a pas assez de fluide. En d'autres termes, ceci permet de garantir l'efficacité de l'injection et de prévenir le pilote de la disponibilité de la fonction.

Dans certains modes de réalisation, on détermine si le dispositif d'augmentation temporaire de puissance est activable en fonction d'au moins un paramètre parmi le niveau du fluide réfrigérant au sein du réservoir, la température du fluide réfrigérant au sein du réservoir, la pression du fluide réfrigérant au niveau de la rampe d'injection, et la vitesse de rotation d'une électropompe du circuit d'injection du dispositif d'augmentation temporaire de puissance.

Ces paramètres, considérés seuls ou en combinaison, peuvent être représentatifs de la disponibilité du dispositif d'augmentation temporaire de puissance.

Dans certains modes de réalisation, on stoppe l'activation du dispositif d'augmentation temporaire de puissance en fonction d'au moins un paramètre parmi le niveau du fluide réfrigérant au sein du réservoir, la température du fluide réfrigérant au sein du réservoir, la durée d'activation du dispositif d'augmentation temporaire de puissance, la puissance instantanée de la turbomachine, ou sur requête de l'utilisateur.

Ceci permet de limiter la consommation du réfrigérant au strict nécessaire. Par exemple l'arrêt du dispositif d'augmentation de puissance peut être automatique ou manuelle. Par exemple, en surveillant certains paramètres comme le niveau du fluide réfrigérant au sein du réservoir, la température du fluide réfrigérant au sein du réservoir, la durée d'activation du dispositif d'augmentation temporaire de puissance, et/ou la puissance instantanée de la turbomachine, on peut stopper le dispositif d'augmentation temporaire de puissance automatiquement si des valeurs seuils sont franchies. L'utilisateur peut également déterminer qu'il n'y a plus besoin d'augmenter temporairement la puissance, et stopper manuellement le dispositif d'augmentation temporaire de puissance.

Un mode de réalisation concerne un programme d'ordinateur comportant les instructions pour l'exécution du procédé selon l'un quelconque des modes de réalisation décrit dans le présent exposé.

Ce programme peut utiliser n'importe quel langage de programmation, et être sous la forme de code source, code objet, ou de code intermédiaire entre le code source et le code objet, tel que dans une forme partiellement compilée, ou dans n'importe quelle autre forme souhaitable.

Un mode de réalisation concerne un support d'enregistrement lisible par ordinateur sur lequel est enregistré le programme d'ordinateur selon le présent exposé.

Le support d'enregistrement peut être n'importe quelle entité ou dispositif capable de stocker un programme. Par exemple, le support peut comporter un moyen de stockage, tel qu'une ROM, par exemple un CD-ROM ou une ROM de circuit microélectronique, ou encore un moyen d'enregistrement magnétique, par exemple une disquette (« floppy disc ») ou un disque dur.

Alternativement, le support d'enregistrement peut être un circuit intégré ou une carte électronique dédiée dans lequel le programme est incorporé, le circuit ou la carte étant adapté pour exécuter ou pour être utilisé dans l'exécution du procédé en question.

Un mode de réalisation concerne un circuit intégré ou une carte électronique configuré pour exécuter le procédé selon le présent exposé.

### Brève description des dessins

L'objet du présent exposé et ses avantages seront mieux compris à la lecture de la description détaillée faite ci-après de différents modes de réalisation donnés à titre d'exemples non limitatifs. Cette description fait référence aux pages de figures annexées, sur lesquelles :
[Fig. 1] La figure 1 représente un aéronef équipé de deux turbomachines,
[Fig. 2] La figure 2 représente en détail une turbomachine de la figure 1, et
[Fig. 3] La figure 3 représente un procédé de régulation de la turbomachine de la figure 2.

### Description des modes de réalisation

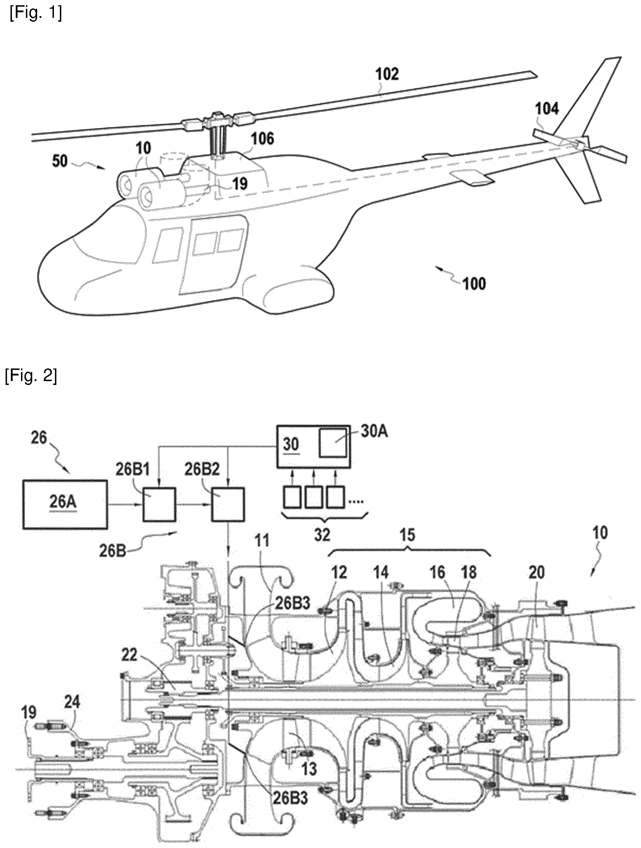

La figure 1 illustre un aéronef 100 à voilure tournante, dans cet exemple un hélicoptère avec un rotor principal 102 et un rotor de queue anti-couple 104 couplés à un ensemble propulsif 50 pour leur actionnement. L'ensemble propulsif 50 illustré comprend deux turbomachines 10, à savoir dans cet exemple deux turbomoteurs dont les arbres de sortie 12 sont tous les deux reliés à une boîte de transmission principale 106 pour actionner le rotor principal 102 et le rotor de queue 104.

Une turbomachine 10 est décrite plus en détail en référence à la figure 2, cette description s'appliquant aux deux turbomachines 10. La turbomachine 10 comprend de l'amont vers l'aval, un carter d'admission d'air 11, un compresseur basse pression 12, un compresseur haute pression 14, une chambre de combustion 16, une turbine haute pression 18 et une turbine libre 20. Les compresseurs haute et basse pression 12 et 14, la chambre de combustion 16 et la turbine haute pression 18 forment un générateur de gaz 15, configuré pour générer les gaz nécessaires à l'entrainement de la turbine libre 20. Cette turbine libre 20 entraine en rotation un arbre moteur 22 relié à une boite de transmission 24, qui entraine en rotation l'arbre 12.

La turbomachine 10 présente un dispositif d'augmentation temporaire de puissance 26 comprenant un réservoir 26A de liquide réfrigérant et un circuit d'injection 26B. Dans cet exemple le circuit 26B peut présenter une pompe 26B1 à débit variable, un clapet 26B2 à ouverture fixe (i.e. ouverture tout ou rien), et une rampe d'injection 26B3. Dans cet exemple la pompe 26B1 peut être une électropompe et le clapet 26B2 peut être un électroclapet. Ainsi, le réfrigérant s'écoule depuis le réservoir 26A vers la pompe 26B1, puis de la pompe 26B1 vers le clapet 26B2, et en suite du clapet 26B2 vers l'injecteur 26B3. Dans cet exemple, l'injecteur 26B3 injecte le réfrigérant en amont du compresseur haute pression 12, au sein du plenum du carter d'admission d'air 11. Par exemple, l'injecteur 26B3 peut être formé par des trous de lavages du carter 11. Selon une variante, l'injecteur peut déboucher plus en aval, dans un étage d'aubes de redressement d'air d'entrée 13, également connu sous le nom « aubes directrices d'entrée » ou encore sous l'acronyme « IGV » pour « inlet gaz vanes » en anglais.

Le dispositif d'augmentation temporaire de puissance 26 est commandé dans cet exemple par une unité de commande 30, qui commande directement la pompe 26B1 et le clapet 26B2. Dans cet exemple, l'unité de commande 30 peut être le système de régulation électronique numérique à pleine autorité de turbomachine (ou FADEC) de la turbomachine 10. L'unité de commande 30 reçoit des informations de différents capteurs 32, dont le nombre et le nature ne sont pas limités. L'unité de commande 30 comprend une ROM 30A formant un support d'enregistrement stockant un programme d'ordinateur comportant les instructions pour exécuter le procédé de régulation décrit ci-après. En d'autres termes, l'unité de commande 30 forme un exemple d'ordinateur tandis que la ROM 30A forme un exemple de support d'enregistrement sur lequel est enregistré un programme d'ordinateur comportant les instructions pour l'exécution du procédé de régulation ci-après, lorsque ledit programme d'ordinateur est exécuté par un ordinateur.

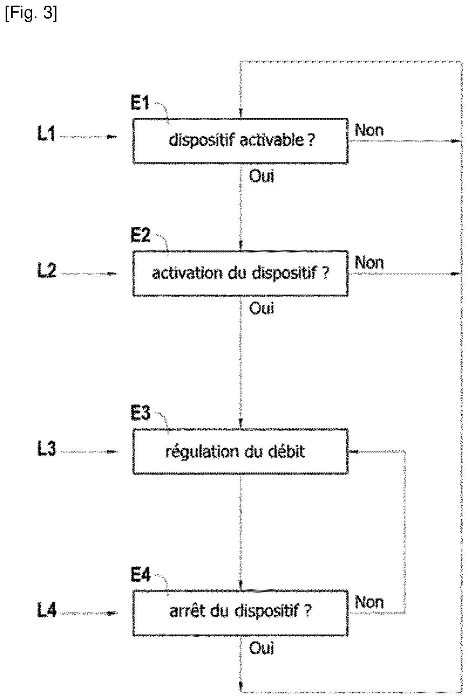

Le procédé de régulation de la turbomachine 10 ou, en d'autres termes, de régulation du dispositif d'augmentation temporaire de puissance 26 (ci-après « le dispositif), est décrit en référence à la figure 3. Ce procédé est exécuté par l'unité de commande 30.

Au cours d'une première étape E1, on détermine si le dispositif 26 est activable. Dans cet exemple, on peut déterminer si le dispositif 26 est activable en fonction d'un ensemble L1 de paramètres comprenant le niveau Nf du fluide réfrigérant au sein du réservoir 26A, la température Tf du fluide réfrigérant au sein du réservoir 26A, la pression Pf du fluide réfrigérant au niveau de la rampe d'injection 26B3 et la vitesse de rotation Nep du rotor de la pompe 26B1 du circuit d'injection 26B du dispositif d'augmentation temporaire de puissance 26. Par exemple les valeurs de ces différents paramètres peuvent être mesurées en temps réel via les capteurs 32.

Si il est déterminé que le dispositif 26 n'est pas activable (Non à l'étape E1), par exemple parce que le niveau de réfrigérant est trop bas, ou parce que la pompe 26B1 ne fonctionne pas correctement, le procédé s'achève. Dans cet exemple, lorsque le procédé s'achève, on retourne au début de l'étape E1. Par exemple, il peut y avoir une temporisation avant de recommencer l'étape E1. S'il est déterminé que le dispositif 26 est activable (Oui à l'étape E1), alors passe à l'étape E2.

Au cours de l'étape E2, on détermine si le dispositif 26 doit être activé ou pas. Dans cet exemple, on peut déterminer si le dispositif 26 doit être activé en fonction d'un ensemble L2 de paramètres comprenant la vitesse de rotation N1 du générateur de gaz 15, la vitesse de rotation N2 de la turbine libre 20, la pression P3 des gaz en sortie du compresseur 14 (i.e. de l'ensemble des étages de compresseur), la température T45 en entrée de la turbine libre 20, le couple moteur TQ de l'arbre 22, le pas collectif XPC du rotor 102 et une éventuelle requête utilisateur. Par exemple les valeurs de ces différents paramètres peuvent être mesurées en temps réel via les capteurs 32.

S'il est déterminé que le dispositif 26 ne doit pas être activé (Non à l'étape E2) le procédé s'achève. Dans cet exemple, lorsque le procédé s'achève, on retourne au début de l'étape E1. Par exemple, il peut y avoir une temporisation avant de recommencer l'étape E1. S'il est déterminé que le dispositif 26 doit être activé (Oui à l'étape E2), par exemple parce qu'on détecte, à partir des paramètres ci-avant, une perte de puissance instantanée de la turbomachine 10 ou une entrée dans un régime prédéterminé de la turbomachine 10 ou un besoin de puissance additionnelle ou une requête de l'utilisateur alors on active le dispositif 26. Pour ce faire, l'unité de commande peut activer la pompe 26B1 et ouvrir le clapet 26B2. On passe ensuite à l'étape E3.

Au cours de l'étape E3, on régule le débit de fluide réfrigérant injecté via la rampe 26B3. Dans cet exemple, on peut réguler le débit en fonction d'un ensemble L3 de paramètres comprenant la pression atmosphérique P0,la température ambiante T0, la température Tf du fluide réfrigérant au sein du réservoir 26A, la pression Pf du fluide réfrigérant au niveau de la rampe d'injection 26B3, la vitesse de rotation N1 du générateur de gaz 15, la vitesse de rotation N2 de la turbine libre 20, la pression P3 des gaz en sortie du compresseur 14 (i.e. de l'ensemble des étages de compresseur), la température T45 en entrée de la turbine libre 20, le couple moteur TQ de l'arbre 22, et le pas collectif XPC du rotor 102. Par exemple les valeurs de ces différents paramètres peuvent être mesurées en temps réel via les capteurs 32. Pour ajuster le débit, l'unité de commande 30 pilote directement le débit délivré par la pompe 26B1. Par exemple, le débit peut être ajusté de sorte que le ratio fluide réfrigérant /air soit compris entre 1% et 12% en masse.

Lorsque le débit est ajusté, on passe à l'étape E4, au cours de laquelle on détermine si le dispositif 26 peut être stoppé ou non. Par exemple, il y a une temporisation entre l'étape E3 et l'étape E4, mais pas nécessairement.

Au cours de l'étape E4, on détermine si le dispositif 26 peut être stoppé ou pas. Par exemple, on peut déterminer que le dispositif 26 peut être stoppe en fonction d'un ensemble L4 de paramètres comprenant le niveau Nf du fluide réfrigérant au sein du réservoir 26A, la température Tf du fluide réfrigérant au sein du réservoir 26A, la durée d'activation du dispositif d'augmentation temporaire de puissance 26 (i.e. le temps écoulé entre l'activation à l'étape E2 et l'étape E4), la puissance instantanée de la turbomachine 10 ou une requête utilisateur. Par exemple les valeurs de ces différents paramètres peuvent être mesurées en temps réel via les capteurs 32.

S'il est déterminé que le dispositif 26 ne doit pas être stoppé (Non à l'étape E4), alors on laisse le dispositif 26 actif, et on retourne à l'étape E3 de régulation. Par exemple, il peut y avoir une temporisation avant de recommencer l'étape E3. S'il est déterminé que le dispositif 26 doit être stoppé (Oui à l'étape E4), par exemple parce qu'il n'y a plus assez de réfrigérant dans le réservoir 26A, parce que le dispositif 26 est actif depuis une durée prédéterminée, parce que la puissance instantanée de la turbomachine est à un seuil admissible, ou sur requête de l'utilisateur, alors on arrête le dispositif 26. Par exemple, pour arrêter le dispositif 26, l'unité de commande 30 arrête la pompe 26B1 et ferme le clapet 26B2. Le procédé s'achève ainsi et on retourne au début de l'étape E1. Par exemple, il peut y avoir une temporisation avant de recommencer l'étape E1.

Bien que la présente invention ait été décrite en se référant à des modes de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Procédé de régulation d'une turbomachine (10) configurée pour être montée sur un aéronef (100), la turbomachine (10) comprenant un dispositif d'augmentation temporaire de puissance (26), ledit dispositif comprenant un réservoir (26A) configuré pour contenir un fluide réfrigérant et un circuit d'injection (26B) configuré pour injecter du fluide réfrigérant via une rampe d'injection (26B3) en amont d'au moins un étage de compresseur (12, 14) de la turbomachine (10), le débit d'injection du fluide réfrigérant étant variable, ledit procédé de régulation comprenant une étape (E2) d'activation du dispositif d'augmentation temporaire de puissance (26) dans laquelle on injecte du fluide réfrigérant en amont d'au moins un étage de compresseur (12, 14) de la turbomachine (10) et une étape (E3) de régulation du débit de fluide réfrigérant dans laquelle on ajuste le débit de fluide réfrigérant injecté en fonction de la pression atmosphérique (P0) et de la température ambiante (T0) et d'au moins un paramètre de la turbomachine tel que la vitesse de rotation d'un générateur de gaz (N1), la vitesse de rotation d'une turbine basse pression ou d'une turbine libre (N2), la pression des gaz en sortie d'un étage de compresseur (P3), la température en entrée de la turbine basse pression ou de la turbine libre (T45), le couple moteur (TQ), et d'au moins un paramètre de l'aéronef (100) sur lequel la turbomachine (10) est configurée pour être montée tel que le pas collectif d'un rotor d'hélicoptère (XPC) ou le pas d'une hélice d'un ou plusieurs turbopropulseurs.

2. Procédé selon la revendication 1, dans lequel on ajuste le débit de fluide réfrigérant injecté de sorte que le ratio fluide réfrigérant /air soit compris entre 0.5% et 15% en masse, par exemple entre 1% et 12% en masse.

3. Procédé selon la revendication 1 ou 2, dans lequel on ajuste le débit de fluide réfrigérant injecté en fonction d'au moins un autre paramètre parmi la température du fluide réfrigérant au sein du réservoir (Tf) et la pression du fluide réfrigérant au niveau de la rampe d'injection (Pf).

4. Procédé selon l'une quelconque des revendications 1 à 3, dans lequel on active le dispositif d'augmentation temporaire de puissance (26) si on détecte une perte de puissance instantanée de la turbomachine (10) et/ou si on détecte une entrée dans un régime prédéterminé de la turbomachine (10) et/ou si on détecte un besoin de puissance additionnelle et/ou sur requête de l'utilisateur.

5. Procédé selon la revendication 4, dans lequel on active le dispositif d'augmentation temporaire de puissance (26) en fonction :
- d'au moins un paramètre de la turbomachine tel que la vitesse de rotation d'un générateur de gaz (N1), la vitesse de rotation d'une turbine basse pression ou d'une turbine libre (N2), la pression des gaz en sortie d'un étage de compresseur (P3), la température en entrée de la turbine basse pression ou de la turbine libre (T45), le couple moteur (TQ), et
- d'au moins un paramètre de l'aéronef (100) sur lequel la turbomachine (10) est configurée pour être montée tel que le pas collectif d'un rotor d'hélicoptère (XPC) ou le pas d'une hélice d'un ou plusieurs turbopropulseurs.

6. Procédé selon l'une quelconque des revendications 1 à 5, dans lequel on détermine si le dispositif d'augmentation temporaire de puissance (26) est activable avant de l'activer (E1).

7. Procédé selon la revendication 6, dans lequel on détermine si le dispositif d'augmentation temporaire de puissance (26) est activable en fonction d'au moins un paramètre parmi le niveau du fluide réfrigérant au sein du réservoir (Nf), la température du fluide réfrigérant au sein du réservoir (Tf), la pression du fluide réfrigérant au niveau de la rampe d'injection (Pf), et la vitesse de rotation d'une électropompe du circuit d'injection du dispositif d'augmentation temporaire de puissance (Nep).

8. Procédé selon l'une quelconque des revendications 1 à 7, dans lequel on stoppe (E4) l'activation du dispositif d'augmentation temporaire de puissance (26) en fonction d'au moins un paramètre parmi le niveau du fluide réfrigérant au sein du réservoir (Nf), la température du fluide réfrigérant au sein du réservoir (Tf), la durée d'activation du dispositif d'augmentation temporaire de puissance, la puissance instantanée de la turbomachine, ou sur requête de l'utilisateur.

9. Programme d'ordinateur comportant les instructions pour l'exécution du procédé selon l'une quelconque des revendications 1 à 8, lorsque ledit programme d'ordinateur est exécuté par un ordinateur.

10. Support d'enregistrement (30A) lisible par ordinateur sur lequel est enregistré le programme d'ordinateur selon la revendication 9.

11. Circuit intégré ou carte électronique configuré pour exécuter le procédé selon l'une quelconque des revendications 1 à 8.

## Patentansprüche

1. Verfahren zur Regelung einer Turbomaschine (10), die dazu ausgestaltet ist, an einem Flugzeug (100) montiert zu sein, wobei die Turbomaschine (10) eine temporäre Leistungserhöhungsvorrichtung (26) umfasst, wobei die Vorrichtung einen Tank (26A), der dazu ausgestaltet ist, eine Kältemittelflüssigkeit zu enthalten, und einen Einspritzkreislauf (26B), der dazu ausgestaltet ist, Kältemittelflüssigkeit über eine Einspritzschiene (26B3) stromaufwärts von mindestens einer Verdichterstufe (12, 14) der Turbomaschine (10) einzuspritzen, umfasst, wobei die Einspritzrate der Kältemittelflüssigkeit variabel ist, wobei das Verfahren zur Regelung einen Schritt (E2) zur Aktivierung der temporären Leistungserhöhungsvorrichtung (26), in die Kältemittelflüssigkeit stromaufwärts von mindestens einer Verdichterstufe (12, 14) der Turbomaschine (10) eingespritzt wird, und einen Schritt (E3) zur Regelung der Rate der Kältemittelflüssigkeit umfasst, bei dem die Rate der eingespritzten Kältemittelflüssigkeit in Abhängigkeit des Atmosphärendrucks (P0) und der Umgebungstemperatur (T0) und von mindestens einem Parameter der Turbomaschine wie der Drehgeschwindigkeit eines Gasgenerators (N1), der Drehgeschwindigkeit einer Niederdruckturbine oder einer freien Turbine (N2), dem Gasdruck an dem Auslass einer Verdichterstufe (P3), der Temperatur an dem Einlass der Niederdruckturbine oder der freien Turbine (T45), dem Motordrehmoment (TQ) und von mindestens einem Parameter des Flugzeugs (100), an dem die Turbomaschine (10) dazu ausgestaltet ist, montiert zu sein, wie der kollektiven Steigung eines Hubschrauberrotors (XPC) oder der Steigung eines Propellers von einem oder mehreren Turboprop-Triebwerken angepasst wird.

2. Verfahren nach Anspruch 1, wobei die Rate der eingespritzten Kältemittelflüssigkeit so angepasst wird, dass das Verhältnis Kältemittelflüssigkeit/Luft zwischen 0,5 Massen-% und 15 Massen-%, zum Beispiel zwischen 1 Massen-% und 12 Massen-% liegt.

3. Verfahren nach Anspruch 1 oder 2, wobei die Rate der eingespritzten Kältemittelflüssigkeit in Abhängigkeit von mindestens einem weiteren Parameter aus der Temperatur der Kältemittelflüssigkeit innerhalb des Tanks (Tf) und dem Druck der Kältemittelflüssigkeit auf Höhe der Einspritzschiene (Pf) angepasst wird.

4. Verfahren nach einem der Ansprüche 1 bis 3, wobei die temporäre Leistungserhöhungsvorrichtung (26) aktiviert wird, wenn ein momentaner Leistungsverlust der Turbomaschine (10) erkannt wird und/oder wenn ein Eintritt in eine vorbestimmte Drehzahl der Turbomaschine (10) erkannt wird und/oder wenn ein Bedarf an zusätzlicher Leistung erkannt wird und/oder auf Wunsch des Nutzers.

5. Verfahren nach Anspruch 4, wobei die temporäre Leistungserhöhungsvorrichtung (26) aktiviert wird in Abhängigkeit von:
- mindestens einem Parameter der Turbomaschine wie der Drehgeschwindigkeit eines Gasgenerators (N1), der Drehgeschwindigkeit einer Niederdruckturbine oder einer freien Turbine (N2), dem Gasdruck an dem Auslass einer Verdichterstufe (P3), der Temperatur an dem Einlass der Niederdruckturbine oder der freien Turbine (T45), dem Motordrehmoment (TQ) und
- mindestens einem Parameter des Flugzeugs (100), an dem die Turbomaschine (10) ausgestaltet ist, montiert zu sein, wie der kollektiven Steigung eines Hubschrauberrotors (XPC) oder der Steigung eines Propellers von einem oder mehreren Turboprop-Triebwerken.

6. Verfahren nach einem der Ansprüche 1 bis 5, wobei bestimmt wird, ob die temporäre Leistungserhöhungsvorrichtung (26) aktivierbar ist, bevor sie aktiviert wird (E1).

7. Verfahren nach Anspruch 6, wobei in Abhängigkeit von mindestens einem Parameter aus der Höhe der Kältemittelflüssigkeit innerhalb des Tanks (Nf), der Temperatur der Kältemittelflüssigkeit innerhalb des Tanks (Tf), dem Druck der Kältemittelflüssigkeit auf Höhe der Einspritzschiene (Pf) und der Drehgeschwindigkeit einer elektrischen Pumpe des Einspritzkreislaufs der temporären Leistungserhöhungsvorrichtung (Nep) bestimmt wird, ob die temporäre Leistungserhöhungsvorrichtung (26) aktivierbar ist.

8. Verfahren nach einem der Ansprüche 1 bis 7, wobei die Aktivierung der temporären Leistungserhöhungsvorrichtung (26) in Abhängigkeit von mindestens einem Parameter aus der Höhe der Kältemittelflüssigkeit innerhalb des Tanks (Nf), der Temperatur der Kältemittelflüssigkeit innerhalb des Tanks (Tf), der Aktivierungsdauer der temporären Leistungserhöhungsvorrichtung, der momentanen Leistung der Turbomaschine oder auf Wunsch des Benutzers gestoppt wird (E4).

9. Computerprogramm, das Anweisungen für die Ausführung des Verfahrens nach einem der Ansprüche 1 bis 8 beinhaltet, wenn das Computerprogramm durch einen Computer ausgeführt wird.

10. Computerlesbares Aufzeichnungsmedium (30A), auf dem das Computerprogramm nach Anspruch 9 aufgezeichnet ist.

11. Integrierte Schaltung oder elektronische Karte, die ausgestaltet ist, um das Verfahren nach einem der Ansprüche 1 bis 8 auszuführen.

## Claims

1. A method for controlling a turbomachine (10) configured to be assembled on an aircraft (100), the turbomachine (10) comprising a temporary power-increasing device (26), said device comprising a reservoir (26A) configured to contain a coolant and an injection circuit (26B) configured to inject coolant via an injection manifold (26B3) upstream of at least one compressor stage (12, 14) of the turbomachine (10), the flow rate of injection of the coolant being variable, said controlling method comprising a step (E2) of activating the temporary power-increasing device (26) wherein coolant is injected upstream of at least one compressor stage (12, 14) of the turbomachine (10) and a step (E3) of controlling the flow rate of the coolant wherein the flow rate of the coolant injected is adjusted as a function of the atmospheric pressure (P0) and of the ambient temperature (T0) and of at least one parameter of the turbomachine such as the speed of rotation of a gas generator (N1), the speed of rotation of a low-pressure turbine or of a power turbine (N2), the gas pressure at the outlet of a compressor stage (P3), the temperature at the inlet of the low-pressure turbine or of the power turbine (T45), the engine torque (TQ), and of at least one parameter of the aircraft (100) for which the turbomachine (10) is configured to be assembled such as the collective pitch of a helicopter rotor (XPC) or the pitch of a propeller of one or more turboprops.

2. The method as claimed in claim 1, wherein the flow rate of the coolant injected is adjusted such that the coolant/air ratio is between 0.5% and 15% in mass, for example between 1% and 12% in mass.

3. The method as claimed in claim 1 or 2, wherein the flow rate of the coolant injected is adjusted as a function of at least one other parameter from among the temperature of the coolant inside the reservoir (Tf) and the pressure of the coolant at the level of the injection manifold (Pf).

4. The method as claimed in any of claims 1 to 3, wherein the temporary power-increasing device (26) is activated if an instantaneous loss of power of the turbomachine (10) is detected and/or if entry into a predetermined rating of the turbomachine (10) is detected and/or if an additional power requirement is detected and/or on request by the user.

5. The method as claimed in claim 4, wherein the temporary power-increasing device (26) is activated as a function of:
- at least one parameter of the turbomachine such as the speed of rotation of a gas generator (N1), the speed of rotation of a low-pressure turbine or of a power turbine (N2), the gas pressure at the outlet of a compressor stage (P3), the temperature at the inlet of the low-pressure turbine or of the power turbine (T45), the engine torque (TQ), and
- at least one parameter of the aircraft (100) for which the turbomachine (10) is configured to be assembled such as the collective pitch of a helicopter rotor (XPC) or the pitch of a propeller of one or more turboprops.

6. The method as claimed in any of claims 1 to 5, wherein it is determined whether or not the temporary power-increasing device (26) is activatable before activating it (E1).

7. The method as claimed in claim 6, wherein it is determined whether or not the temporary power-increasing device (26) is activatable as a function of at least one parameter from among the level of coolant inside the reservoir (Nf), the temperature of the coolant inside the reservoir (Tf), the pressure of the coolant at the level of the injection manifold (Pf), and the speed of rotation of an electric pump of the injection circuit of the temporary power-increasing device (Nep).

8. The method as claimed in any of claims 1 to 7, wherein the activation of the temporary power-increasing device (26) is stopped (E4) as a function of at least one parameter from among the level of coolant inside the reservoir (Nf), the temperature of the coolant inside the reservoir (Tf), the activation time of the temporary power-increasing device, the instantaneous power of the turbomachine, or on request by the user.

9. A computer program including instructions for executing the method as claimed in any of claims 1 to 8, when said computer program is executed by a computer.

10. A recording medium (30A) readable by a computer on which is recorded the computer program as claimed in claim 9.

11. An integrated circuit or electronics card configured for executing the method as claimed in any of claims 1 to 8.
